# EUROPEAN PATENT SPECIFICATION

(11) **EP 2 075 483 B1**
(45) Date of publication and mention of the grant of the patent: **14.09.2011**
(21) Application number: 07830013.4
(22) Date of filing: 17.10.2007
(51) Int. Cl.: F16D 65/20, F16D 55/228

(54) **BRAKE CALIPER FOR DISK BRAKE**
BREMSSATTEL FÜR EINE SCHEIBENBREMSE
ÉTRIER DE FREIN POUR FREIN À DISQUE

(30) Priority: 19.10.2006 JP 2006284594; 24.01.2007 JP 2007013658; 24.05.2007 JP 2007137353
(43) Date of publication of application: 01.07.2009
(73) Proprietor: Nukabe Corporation, Gunma 3701201 (JP)
(72) Inventor: KURITA, Shozo, Okazaki-shi Aichi 4440802 (JP)
(74) Representative: Strehl Schübel-Hopf & Partner
(86) International application number: PCT/JP2007/070279
(87) International publication number: WO 2008/047840

(56) References cited:
- DE-A1- 3 820 373
- DE-A1- 10 034 364
- DE-A1- 10 200 967
- DE-A1- 19 925 005
- DE-A1-102004 040 422
- JP-U- 63 160 446

## Description

### Field of the Invention

The present invention relates to a brake caliper of a disk brake that is used in a vehicle such as an automobile or a motorcycle.

### Description of the Related Arts

There are two types of brake caliper; a brake caliper of the first type has at least one piston on only one side of a brake disk (a disk to be braked), while a brake caliper of the second type has at least one piston on each side of a brake disk; in the case of the second type, a piston on one side and a piston on the other side face each other across the brake disk. Many performance cars adopt a disk brake of the second type; some racing cars or rally cars (either of which is a typical performance car) are provided with a brake caliper having three or more pistons on each side of a brake disk, for a total of six or more pistons.

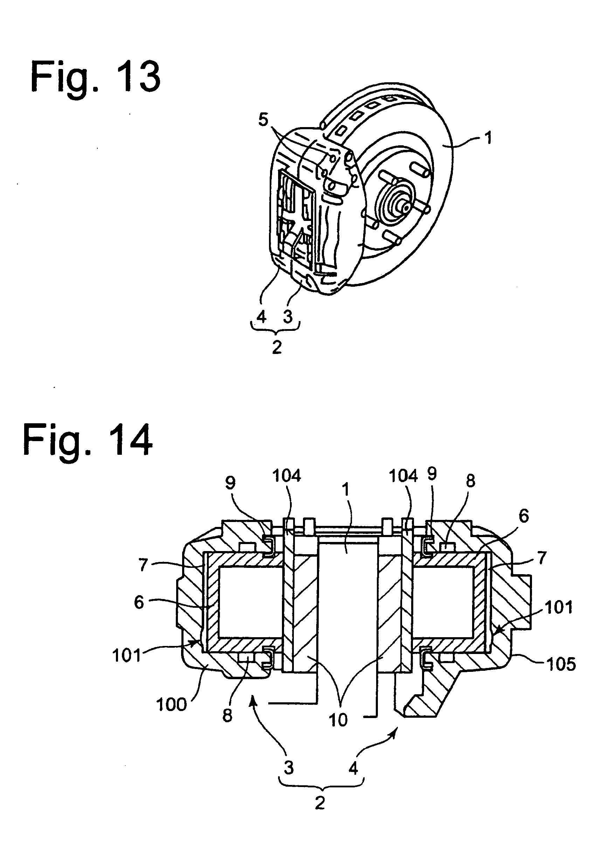

An example structure of a conventional brake caliper is shown in Figs. 13 to 15.
Fig. 13 shows a perspective view that depicts an outline fitting arrangement as to a conventional brake caliper. A brake caliper 2 generally comprises an outer piece 3, an inner piece 4, and a bolt 5 fastening the pieces 3 and 4; whereby, the brake caliper 2 is arranged so that the caliper 2 sandwiches a disk rotor 1 with the pieces 3 and 4.

Fig. 14 shows a cross section that depicts a configuration as to the conventional brake caliper 2. The outer piece 3 comprises: an outer caliper body 100; a hole 101 for housing a piston (a brake piston) 6 so that the cylindrical piston 6 can be guided by the hole 101 as well as slide along an axis of the hole 101; thereby, a hydraulic chamber 7 is demarcated (implemented) between the bottom wall of the hole 101 and the head (top) wall of the piston 6 so that hydraulic oil (brake fluid) which is pressurized by a master hydraulic cylinder (not shown) is supplied to the hydraulic chamber 7 through a feed oil pipe (not shown). Further, a square seal 8 as a seal element is provided between an outer periphery of the piston 6 and a cylindrical periphery wall of the hole 101, so that the brake fluid does not leak; and, a dust seal 9 is provided so as to prevent intrusion of the impurities from outside (the brake fluid supply side).

In the outer piece 3, a brake pad 10 is configured so as to be adhesively fixed to a backing plate 104; the brake pad 10 is pressed against the disk rotor 1 via the backing plates 104 in response to the movement of the piston 6, so that braking force is generated.
In the inner piece 4, the situation is the same as in the outer piece 3; the inner piece 4 comprises: an inner caliper body 105, and a hole 101 for housing a piston 6. Thus, the outer piece 3 and the inner piece 4 are integrated into the brake caliper 2 so as to configure the caliper 2.

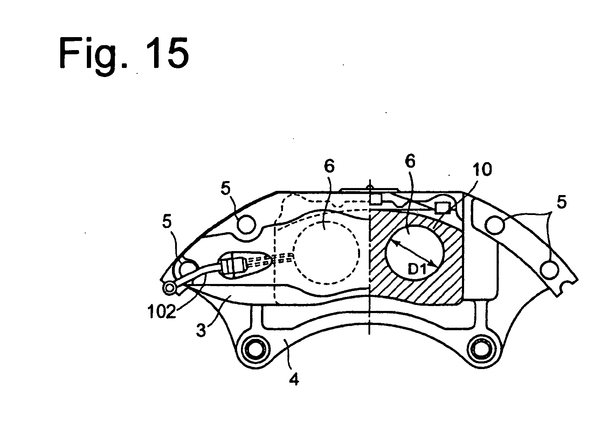

Fig. 15 shows a front view that depicts a relative arrangement as to the brake pad 10 and the piston 6, a part of the view showing a cross section. As shown in Fig. 15, in contrast with the brake pad 10, the piston 6 is considerably smaller; a region that is not pressed by the piston 6 is rather broad; namely, the piston 6 cannot sufficiently press most of a region on the outside of a circle (the piston area) of the piston 6, in particular, on the vehicle center side; where Fig.15 is concerned, the vehicle center side corresponds to the lower part of Fig.15. This situation causes distortion of the backing plates 104 and becomes a factor behind uneven wear of the brake pad 10. Further, a free vibration of the region on which the piston 6 cannot sufficiently press becomes a factor behind brake squealing.

In order to prevent the uneven wear of the brake pad 10 or the brake squealing, many kinds of brake calipers are known, the calipers having three or more pistons on each side of a brake disk; for instance, the patent reference 1 discloses a brake caliper having three pistons on each side of a brake disk so as to press more evenly on the backing plate and thence on to the brake pad.

On the other hand, many kinds of contrivances are known whereby a square seal is provided on a circumference surface of a brake piston; after hydraulic pressure is released, by means of the restoring force of the seal, the brake piston returns to a position where the piston is placed before the piston is pressed by the hydraulic pressure against a brake disk via a backing plate and a brake pad; on the other hand, the piston is re-activated by a generated hydraulic pressure so as to press the brake disk via the brake pad.
For instance, the patent reference 2 discloses an ideal characteristic quadratic curve as to piston return-back displacement with respect to hydraulic pressure during pressure release, the curve being defined as a superposition of a caliper deformation curve and a brake pad compression curve. In the disclosed contrivance, two parameters are varied; namely, they are the rubber hardness of the square seal, and the size of the chamfer volume as to the corner of the groove for the square seal; and, it is shown that a solution that approximates the ideal curve characteristics can be obtained by selecting pertinent levels for the two parameters.
DE 10 2004 040422 A1 discloses a brake caliper with the features of the pre-characterizing portion of claim 1.

### Quoted References

### (References)

Patent Reference 1: JP2002-213502
Patent Reference 2: JP1998-325432

### Summary of the Invention

### Problems to be solved by the invention

The patent reference 1 discloses a brake caliper provided with three pistons on the outer piece side and on the inner piece side, respectively; however, the structure of the brake caliper is complicated, and the number of manufacturing man-hours is increased; further, because of the extra space needed for housing an increased number of pistons, the rigidity of the caliper body is reduced; for the purpose of compensating the lowered rigidity, the caliper body has to be reinforced; as a result, disadvantages of increased caliper mass and increased cost are incurred.

In general, many performance cars have disk brakes in which two or more pistons are provided on each side of their brake disks thereby a pair of pistons on each side face each other across the brake disk; on the other hand, the area of the brake pad is determined in response to vehicle mass, regardless of the number of the pistons; in other words, the brake pad area is increased in proportion to vehicle mass. Thus, for instance, in a case where at least two pistons are provided on each side of the disk rotor, a region of the brake pad that is pressed by the pistons extrudes toward the neighboring regions around the pressed region, which causes uneven wear and/or brake squealing.

In order to significantly reduce the distortion of the backing plate and thence the brake pad when pressed by the piston, a manner providing at least three pairs of pistons can be taken into consideration in view of a brake pad structure; however, since it becomes necessary that additional pistons be manufactured, and the space housing the additional pistons be provided in the brake caliper; accordingly, this manner is likely to incur mass and/or cost increases. Further, according to this manner, the neighboring pistons are placed close to each other; thus, the rigidity of the brake caliper is lowered, when a high brake fluid pressure is applied; as a result, for the purpose of compensating the lowered rigidity, the parts surrounding the pistons have to be reinforced; therefore, further mass and/or cost increases are incurred.

On the other hand, the patent reference 1 discloses an ideal characteristic quadratic curve as to piston return-back displacement with respect to hydraulic pressure during the pressure release, the curve being defined as a superposition of a caliper deformation curve and a brake pad compression curve; the reference 1 discloses a contrivance that a characteristic corresponding to the ideal curve is approximately obtained by means of adjusting two factors, namely, the rubber hardness of the square seal, and the size of the chamfer volume as to the corner of the groove for the square seal. However, further improvements are required so as to obtain an ideal characteristic that satisfactorily resembles the ideal curve as to the piston return-back displacement.
There are two kind of problems in finding the two factors at the same time; one problem relates to securing for the driver good brake pedal 'feel' during low brake fluid pressure when the brake pedal is lightly stepped on as well as during high brake fluid pressure under such a condition that an ABS (Anti-lock Braking System) works; the other problem relates to resolving a dragging phenomenon between the brake pad and the brake disk, during normal driving.

In general, a brake caliper generates a brake force in a manner that at least one piston on each side of the brake disk is provided so as to form at least one pair of pistons; the pistons of each pair face each other across the brake disk; an applied brake fluid pressure thrusts the pair of pistons toward the brake disk so that the pair of brake pads sandwiches the brake disk from both sides.
Further, on the outer periphery of the piston, a square seal is provided so as to prevent the brake fluid from leaking outward, as well as, so as to return the piston back to the original position where the piston is placed before a braking action, in response to the release of the braking action or the brake fluid pressure.

Regardless of the provision of the square seal, the brake fluid pressure varies every moment; at some point in time, the pressure is high, and at another point in time, the pressure is low; further, as the brake pad wears down, the original position of the piston before the brake pedal is stepped on moves closer to the brake disk in response to the wear of the pad; accordingly, the deformation of the square seal in shape varies with each repeated braking action; thus, in a conventional technology, it is difficult to provide a square seal that prevents brake fluid leakage under all the braking conditions such as a low brake fluid pressure condition or a high brake fluid pressure condition; it is also difficult to provide a square seal that satisfies the requirement as to the piston return-back characteristic.

In view of the situation as described above, the present invention aims to provide a brake caliper: being of a compact structure as well as having the same level of performance as in a conventional brake caliper with one or more pairs of pistons; reducing the dragging resistance between the brake pad and the brake disk to a minimum level; avoiding uneven wear or brake squealing as to the brake pad; doing away with mass and/or cost increases; and securing a good brake pedal 'feel'.

### Means to solve the problem

An aspect of the present invention as a measure to overcome the difficulties as described above is a brake caliper for a disk brake as defined in Claim 1. Further advantageous features are set out in the dependent claims.

According to the above aspect of the present invention, the pressing part of the piston is of an annular ring shape while the pressing part of a conventional piston is of a solid cylinder shape; thus, the outer diameter of the piston area, namely, the outer diameter of the piston pressing part in the present invention can be larger than the diameter of the piston pressing part in the conventional piston, even though the piston area of the piston of the present invention and the piston area of the conventional technologies are the same.
For instance, in view of a conventional brake caliper having two pairs of pistons, a region of the brake pad that is pressed by the pistons extrudes toward the outside of the pressed region, especially toward the vehicle wheel axis of rolling rotation; thus the brake piston in the conventional technology suffers from uneven wear or brake squealing as to the brake pad; on the contrary, in this invention, an extruded region can be substantially reduced in size thanks to the increased outer diameter of the piston area; accordingly, the brake pad can be pressed with an even surface pressure distribution pattern over the whole brake pad; a clearance gap between the brake pad and the disk rotor can be narrower; as a result, an excellent braking force can be achieved, and the problem of brake squealing can be removed.

Further, in the above aspect of this invention, the problem as to the extrusion of the brake pad can be settled without increasing the pairs of pistons in number to more than three pairs; thus, manufacturing of additional pistons, machining of additional piston-housing-hole spaces, reinforcing of the parts around the additional spaces can be dispensed with; as a result, the disadvantage of mass and/or cost increases can be avoided.

In the next place, preferably in the described aspect, as a mode thereof, a center protrusion part is provided so as to form the inner diameter periphery wall of the annular ring shaped hole space for housing the piston; and, the center protrusion is formed as a member separated from the caliper body.

According to the structure (as the mode of the above aspect) just described above, in contrast to a structure whereby the center protrusion is provided as a part of the caliper body, the brake caliper in this mode can dispense with a complicated boring-machining of the hole space for housing the piston; therefore, more cost-effective mass production can be achieved.
Further, in a conventional brake caliper, an inner piece and an outer piece of the brake caliper body are manufactured as divided members, so that the two members are fastened with a bolt; thus, it is difficult to achieve a sufficient level of rigidity as to the whole caliper, in consideration of a case when a high brake fluid pressure is applied; however, in this mode of the first aspect, the inner piece and the outer piece are combined into a single piece, in spite of the incorporation of the annular ring shaped hole space for housing the piston; and, the caliper rigidity is not reduced under a high brake fluid pressure condition, partly because of the elimination of the fastening bolt that reduces the stiffness of a brake caliper; as a result, a brake caliper of lower mass and of enhanced rigidity and excellent braking performance can be realized.

In the following place, a variation of the above mode is preferably the brake caliper (the caliper-protrusion separation structure), whereby the center protrusion part forms a part of the caliper body, and the center protrusion part is separated from the remainder of the caliper body in the direction towards the center axis of the piston.
Another variation of the above mode is preferably the brake caliper, whereby a top protrusion part of the center protrusion part is separated from the center protrusion part itself; in this variation, the center protrusion part includes the top protrusion part and a base protrusion part.

In the case where the center protrusion part forms a part of the caliper body, and the center protrusion part is separated from the remainder of the caliper body in the direction of the center axis of the piston, in consideration of machining the annular ring shaped hole space for housing the piston, a complicated boring-machining of the hole space can be eliminated, thereby making the caliper body much easier to mass produce.
In the other case where the top protrusion part as to center protrusion part is separated from the rest of the center protrusion part, the annular ring shaped hole space can be easily machined, since a machining jig for a complicated boring-machining of the hole space is not required, thereby eliminating any possible risk of the machining jig's colliding with the top protrusion part of the center protrusion; as a result, because of the elimination of this risk, enhanced machining accuracy can be secured with enhanced rigidity of the jig, and enhanced productivity can be obtained as well. It is noted that the remaining part described just above means the center protrusion part from which the top protrusion part is removed; namely, the remaining part is a base (center) protrusion part.

Regarding the separated structure between the center protrusion part and the caliper body, or, between the top protrusion part and the base protrusion part, a fastening method such as a screw mechanism, a friction welding, a diffusion bonding, a welding or an adhesive bonding is preferably applied so that the separated structure is combined into a single piece.
Since the separated two parts are fastened with a screw mechanism, or another method such as a friction welding, the center protrusion part can be formed without significantly changing a machining operation or process from that in a conventional brake caliper in which a center protrusion part dose not exist.

In the separated structure as described above, an inner seal groove for housing the inner seal that slides on and comes in contact with the inner periphery wall for the piston is preferably provided on the side of the outer diameter periphery wall of the center protrusion part or the top protrusion part of the center protrusion part.
Thus, since the inner seal groove for housing the inner seal that slides on and comes in contact with the inner periphery wall for the piston is formed in a member separated from the caliper body, the inner seal that slides on and comes in contact with the inner periphery wall for the piston can be placed in a determined position with accuracy, only with providing the center protrusion part or the top protrusion part of the center protrusion part each of which has the accurately pre-machined inner seal groove.

In the case where the top protrusion part of the center protrusion part is separated from the remainder of the center protrusion part, the outer diameter of the top protrusion part is preferably larger than the outer diameter of the remainder (the base protrusion part) of the center protrusion part.
In the structure as described above, since the outer diameter of the top protrusion part is larger than the outer diameter of the base protrusion part, a fine machining for the outer diameter of the base protrusion part can be dispensed with; thereby, what is required is only installing the top protrusion part, which is accurately pre-machined, into the brake caliper.
As a result, the inner seal that slides on and comes in contact with the inner periphery wall for the piston can be easily provided in the brake caliper.

Further, preferably in the above aspect of the present invention, an outer clearance is provided between the outer periphery wall of the piston and the outer diameter periphery wall of the piston-housing hole, as well as, an inner clearance is provided between the inner periphery wall of the piston and the inner diameter periphery wall of the piston-housing hole; whereby a difference in amount between both clearances is made.

According to the structure of the brake caliper as just described above, the outer clearance is provided between the outer periphery wall of the piston and the outer diameter periphery wall of the piston-housing hole, as well as, the inner clearance is provided between the inner periphery wall of the piston and the inner diameter periphery wall of the piston housing hole; and, a difference in amount between both clearances is made; this point brings a structural advantage in regard to strength, as to the center protrusion part that is formed with the inner diameter periphery wall of the piston housing hole, because the center protrusion part can be less prone to be pushed by a force such as causes a bending moment to the center protrusion part; a detail as to this advantage will be explained in the later description of the third embodiment.
Moreover, a piston can surely return back to an original position where the piston is placed before a braking action, when the brake fluid pressure is released.

In addition, preferably in the above aspect of the present invention, the caliper having the piston of the annular ring type is provided with a hollow space inside of the ring itself. It is noted that the piston in the present invention is of a shape of a thick-walled cylinder; therefore, the shape of the piston is also of an annular ring type.
With the structure as above, since the ring itself as the piston shape is not of a solid body type but a hollow body type, the piston can be of a lower mass; moreover, the thermal capacity of the piston can be optimized so that the piston endures the heat generated during a braking action.

According to the above aspect, since not only the outer seal on the outer periphery of the piston but also the inner seal on the inner periphery of the piston are provided, the piston can be surely returned back to an original position before a braking action, thanks to the enhanced deformation restoring capability as to each seal, when the brake fluid pressure is released; thus, a dragging phenomenon between the brake disk and the brake pad can be less prone to be caused.

Another feature of the above aspect is that the outer seal has a higher stiffness than the inner seal. By specifying a stiffness characteristic of each seal as is described above, an ideal seal characteristic for restoring the piston displacement or the seal deformation can be achieved by means of combining the different characteristics of the seals, namely, by means of combining the higher shearing stiffness of the outer seal around a larger diameter periphery with the lower shearing stiffness of the inner seal around a smaller diameter periphery.
In other words, an ideal seal characteristic can be achieved so as to ideally restore the piston displacement to a proper position, or so as to ideally restore the seal deformation to a proper shape; whereby, a vehicle driver cannot feel any backplay (backlash) when stepping on the brake pedal after a surplus return-back of the brake piston; further, a dragging phenomenon between the brake pad and the brake disk can be avoided during a low brake fluid pressure under a condition that the brake pedal is lightly stepped on as well as during a high brake fluid pressure under such a condition that an ABS (Anti-lock Braking System) works.

According to the above aspect of the present invention, the pressing part of the piston is of an annular ring shape while the pressing part of a conventional piston is of a solid cylinder shape; thus, the outer diameter of the piston area, namely, the outer diameter of the piston pressing part in the present invention, can be larger than the diameter of the piston pressing part in the conventional piston, even though the respective piston areas are the same; thus, the brake caliper in the present invention can be of a compact structure, and has the same level of performance as in a conventional brake caliper with at least two pairs of pistons.

In view of a conventional brake caliper having, for instance, two pairs of pistons, a region of the brake pad that is pressed by the pistons extrudes toward the outside of the pressed region, especially toward the vehicle wheel center axis; thus the brake piston in the conventional technology suffers from uneven wear or brake squealing as to the brake pad; on the contrary, in this invention, an extruded region can be significantly reduced in size thanks to the increased outer diameter of the piston; accordingly, the brake pad can be pressed with an even surface pressure distribution pattern over the whole brake pad; the clearance gap between the brake pad and the disk rotor can be reduced; as a result, an excellent braking force can be achieved, and the problem of brake squealing can be removed.

Further, in the above aspect of this invention, the problem as to the extrusion of the brake pad can be settled without increasing the pairs of pistons in number to more than three pairs; thus, manufacturing of additional pistons, machining of additional piston-housing hole spaces, reinforcing of the parts around the additional spaces can be dispensed with; as a result, any disadvantages of mass and/or cost increases can be avoided.

According to the above aspect of the present invention, since not only the outer seal on the outer periphery of the piston is provided, but also the inner seal on the inner periphery of the piston is provided, the piston can be surely returned back to its original position before a braking action, thanks to the enhanced deformation restoring capability as to each seal, when the brake fluid pressure is released; thus, a dragging phenomenon between the brake disk and the brake pad is significantly less likely.

### Brief Description of the Drawings

In what follows is described a non-limiting example of a preferred embodiment which is visualized in the accompanying drawings, in which:
Fig. 1 shows a cross section that depicts a brake caliper according to a first embodiment of the present invention;
Fig. 2 shows a front view that depicts a fitting arrangement as to the brake caliper according to the first embodiment of the present invention, a part of the view showing a cross section;
Fig. 3 shows a cross section that depicts a brake caliper according to a second embodiment of the present invention;
Fig. 4 shows a cross section that depicts how a square seal is located, the seal sliding on a surface of a piston while coming into contact therewith;
Fig. 5 shows a cross section that depicts how the square seal deforms while the piston is being activated;
Fig. 6 shows characteristic curves as to the relationships between piston displacements (or return-back displacements) and hydraulic pressures (brake fluid pressures), while the hydraulic pressures are being released;
Fig. 7 shows a cross section that depicts the clearances between a caliper body and the piston as well as between a center protrusion of the caliper and the piston according to the third embodiment of the present invention, whereby the caliper body as well as the protrusion slides on and comes in contact with the piston through the clearances or the square seals;
Fig. 8 shows a cross section that depicts the brake caliper according to a fourth embodiment of the present invention;
Fig. 9 shows a cross section that depicts the brake caliper according to a fifth embodiment of the present invention;
Fig. 10 shows a cross section that depicts the brake caliper according to another mode of the fifth embodiment of the present invention;
Fig. 11 shows a cross section that depicts a detailed center protrusion according to a sixth embodiment of the present invention;
Fig. 12 shows a cross section that depicts the brake caliper according to a seventh embodiment of the present invention;
Fig. 13 shows a perspective view that depicts an outline fitting arrangement as to a conventional brake caliper;
Fig. 14 shows a cross section that depicts a configuration as to a conventional brake caliper;
Fig. 15 shows a front view that depicts a fitting arrangement as to a conventional brake caliper, a part of the view showing a cross section.

### The items with the numerals in the figures are explained as follows:

- 1: a disk rotor;
- 2: a brake caliper;
- 3: an outer piece
- 4: an inner piece
- 5: a bolt;
- 6: a piston (a brake piston);
- 7: a hydraulic chamber;
- 8: a square seal;
- 9: a dust seal;
- 10: a brake pad;
- 21: a hole for housing the piston, a piston-housing hole,
or a piston
containing hole;
- 22: a center protrusion, or a center protrusion part;
- 23: a piston, or a brake piston;
- 24: a hollow space;
- 25: a hydraulic chamber;
- 27: a force pressing part, or a thrusting part;
- 29: an engaging hole;
- 31: a square seal;
- 33: a dust seal;
- 36: a square seal;
- 38: a chamfer;
- 40: an end plug;
- 43: a machined (machining) hole for housing the element 40;
- 45: a fastening screw, or a screw mechanism;
- 47: a step;
- 49: a fitting surface;
- 50: a guide member;
- 52: a base protrusion part, or a base (part);
- 54: a thread part;
- 55: pressure welding;
- 56: a recess;
- 58: an inner seal groove;
- 60: a dust boot;
- 100: an outer caliper body;
- 101: a hole for housing the piston, a piston-housing hole,
or a piston
containing hole;
- 104: a backing plate;
- 105: an inner caliper body.

### Description of the Preferred Embodiments

Hereafter, the present invention will be described in detail with reference to the embodiments shown in the figures. However, the dimensions, materials, shape, the relative placement and so on of a component described in these embodiments shall not be construed as limiting the scope of the invention thereto, unless especially specific mention is made.

### (A first embodiment)

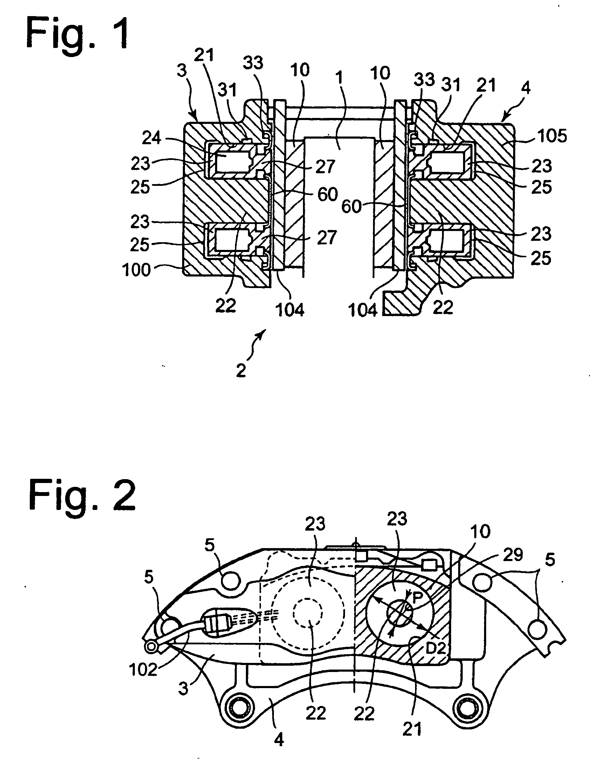

Hereby, a first embodiment according to the present invention is explained based upon Figs. 1 and 2 where the same numeral symbols are used as those in Figs. 13 to 15 as to the conventional technology, in the case where a numeral symbol is common to the present invention and the conventional technology.
The whole configuration of a brake caliper 2 in Figs. 1 and 2 is basically the same as the fitting arrangement of the brake caliper 2 in Figs. 13 to 15. The brake caliper 2 is configured so as to sandwich a disk rotor 1 with an outer piece 3 and an inner piece 4; and, the brake caliper comprising: the outer piece 3, the inner piece 4, and a bolt 5 fastening the pieces 3 and 4.

As shown in Fig. 1, the outer piece 3 comprises: an outer caliper body 100; a hole 21 for housing a piston (a brake piston) 23 so that the piston 23 can be guided in the hole 21 as well as sliding along an axis of the hole 21; thereby, a hydraulic chamber 25 is demarcated (implemented) between the bottom wall of the hole 21 and the head wall of the piston 23 so that hydraulic oil (brake fluid) which is pressurized by a master hydraulic cylinder (not shown) is supplied to the hydraulic chamber 7 through a feed oil pipe (not shown).
The piston 23 is configured so as to form an annular tubular shape (or an annular ring shape, or a shape of a cylinder with a hollow co-cylinder, or a shape of a thick-walled cylinder), and the piston is provided with a thrusting part 27 of an annular shape in the piston itself; thereby, the thrusting part 27 transfers pressing forces toward the disk rotor via a brake pad 10. And, the outer caliper body 100 is provided with the hole 21 of an annular groove shape for housing the piston 23; thereby, the annular-tubular-shaped piston 23 can be guided by the hole 21 incorporated in the outer caliper body 100 with an annular groove shape, as well as sliding along an axis of the hole 21.

In the outer piece 3, a brake pad 10 is configured so as to be adhesively fixed to a backing plate 104; the brake pad 10 is pressed against the disk rotor 1 via the backing plate 104 in response to the movement of the piston 23, so that a braking force is generated.
In the inner piece 4, the situation is the same as in the outer piece 3; in the inner piece 4 as in the outer piece 3, the inner caliper body 105 is provided with the hole 21 for housing the piston 23. The outer piece 3 and the inner piece 4 are integrated into the brake caliper 2.

According to this embodiment as to the brake caliper 2 as shown in Fig. 2, a center protrusion 22 is formed in the middle part of the hole 21 for housing each piston 23 of the outer piece 3 and the inner piece 4; thereby, the protrusion 22 forms an inner periphery wall for the piston 23. Further, as shown in Fig. 2, in the middle part of the piston 23 in response to the protrusion 22, an engaging hole 29 is provided.
In other words, the outer periphery wall of the piston 23 slides on and comes in contact with the outer diameter periphery wall of the hole 21 for housing the piston 23, while the inner periphery wall of the piston 23 slides on and comes in contact with the outer diameter periphery wall of the protrusion 22. More specifically, the piston 23 is configured so as to form an annular tubular shape; the geometry of the piston 23 is as if it was cut from a short length of thick-walled circular-section pipe.
In addition, as shown in Fig. 2, the inner piece 4 is fastened to the outer piece 3 by a bolt 5.
Further, the piston may be configured so as to form an annular tubular shape, as shown in Fig. 1.

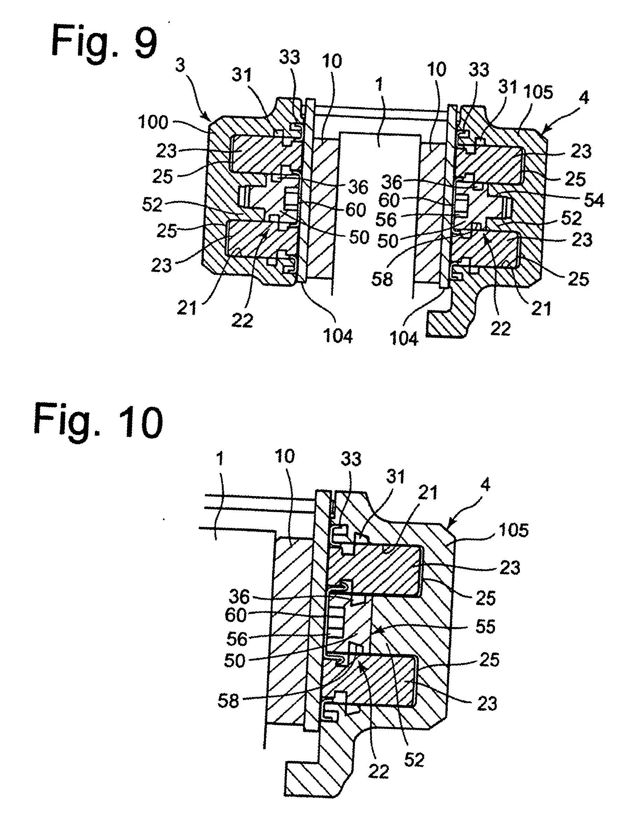

In the clearance space between the outer periphery wall of the piston 23 and the outer diameter periphery wall of the hole 21, a square seal 31 (an annular ring seal member having a square cross section orthogonal to the ring hoop direction) is provided; the square seal 31 is also called an outer square seal 31, and the seal 31 prevents the leakage of brake fluid. On the other hand, as shown in Fig. 1, for preventing foreign matter such as dust from entering the clearance space, a dust seal 33 is provided at the open end of the clearance space, as shown in Fig. 10. ; further, for preventing foreign matters such as dust or mud from entering inside of the clearance, a dust boot 60 is fitted on the top side of the protrusion 22.

In consideration of a conventional piston of the same outer diameter as the piston 23, the area to be pressed by the piston 23 is reduced by the cross section area of the engaging hole 29 that corresponds to the center protrusion 22, in contrast with the piton area of the conventional piston; hereby, it is noted that the center protrusion 22 in either of the outer piece 3 and the inner piece 4 is depicted as shown in Fig. 1, while the piston 23 area to be pressed by brake fluid is depicted as the area of the large circle of diameter D₂ minus the area of the small circle of diameter P, as shown in Fig. 2.
Since a reduced braking force is not desirable, it is required that the above-described decrease in the area be compensated for with an enlargement of the outer diameter as to the piston 23. For instance, as shown in Fig. 2, a greater diameter D₂ (Fig. 2) increased in comparison with a conventional lesser diameter D₁ (Fig. 15) can be adopted. Thus, the region of the brake pad 10 that is not pressed by the piston 23 can be automatically reduced with the above-described configuration.

In addition, it is preferable that the ratio of the inner diameter P to the outer diameter D₂ as to the annular thrusting part 27, namely, the ratio P/D₂ is within 0.35 to 0.65; when the ratio is equal to or less than 0.35, then a sufficient effect on a piston area enlargement with an increased outer diameter cannot be expected; and, when the ratio is equal to or more than 0.60, then an even thrusting (contact) pressure distribution over the brake pad cannot be expected because of a reduced (contact) pressure distribution around the piston center.

In addition, a rectangular cross section orthogonal to the hoop direction as to the annular piston 23 may be of a solid core type; however, the rectangular cross section of a hollow type is provided in this embodiment.
Since the annular piston 23 in this embodiment has a hollow space 24, the piston 23 is of lower mass, which contributes to a reduction in the whole brake caliper mass. Thus, even in a case where an impressing speed as to a brake fluid pressure, a sufficient follow-up movement of the piston can be achieved thanks to the reduced mass of the piston 23.

In addition, since the piston 23 has the hollow space 24, the mass of the piston can be varied by varying the volume of the hollow space 24; and, thereby the thermal capacity of the piston can be optimized so that the piston endures the heat generated while the brake is being activated. In a case where the piston 23 is made from metal, the piston having the hollow space 24 can be formed as a united piece manufactured from two divided parts, by means of a method such as welding, soldering, friction-welding or the like. Were the piston to be made from resin, the piston can be formed as a united piece manufactured from two divided parts, for instance, by means of a method such as solvent welding.

According to the above-detailed embodiment, since the outer diameter of the piston 23 of the brake caliper can be increased without disturbing the balance of the braking forces between the front wheels and rear wheels as to a vehicle, the region of the brake pad 10 that is not pressed by the piston 23 can be reduced; thus, the occurrence of uneven wear or brake squealing in relation to the brake pad 10 can be prevented.

Further, according to the above-detailed embodiment, the brake pad 10 can be more evenly pressed toward the disk rotor, without the conventional requirement such as shown in Fig. 15 whereby the number of the pistons 6 is inordinately increased. Thus, a distance from a piston 23 to an adjacent piston 23 can be greater than a distance from a piston 6 to an adjacent piston 6 (Fig. 15); therefore, the brake caliper stiffness can be sufficient; in conclusion, this embodiment does not incur a potential cost or mass increase as does the conventional method.

### (A second embodiment)

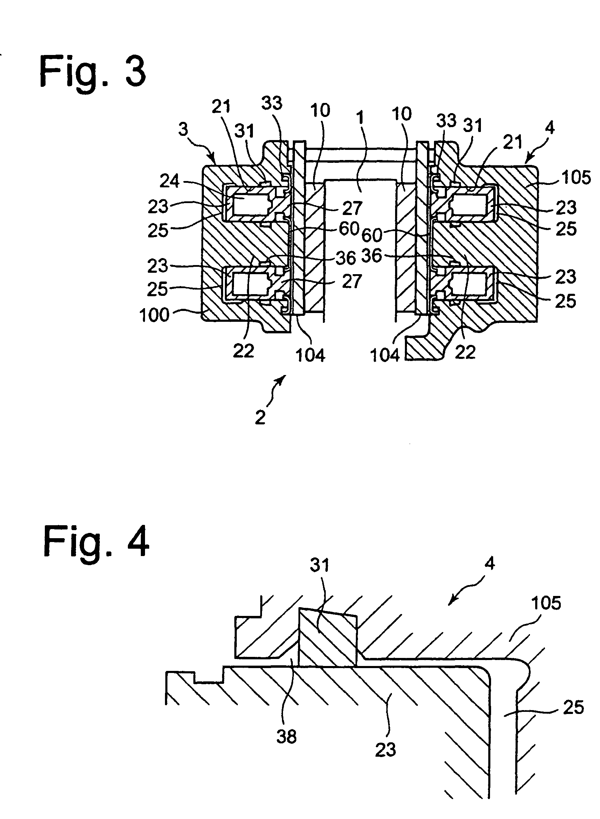

Hereby, a second embodiment according to the present invention is explained based upon Figs. 3 to 6.
In the first embodiment, a square seal 31 is provided as an outer seal (a piston outer seal) between the outer diameter periphery wall of the hole 21 and the outer periphery wall of the piston 23, whereas, in the second embodiment, a square seal 36 is additionally provided as an inner seal (a piston inner seal) between the outer diameter periphery wall of the hole 21.
It goes without saying that there is no problem, from a functional point of view, in providing the square seal 36 not on the center protrusion 22 side but on the piston 23 side, by providing a groove for the square seal 36 on the piston 23 side.

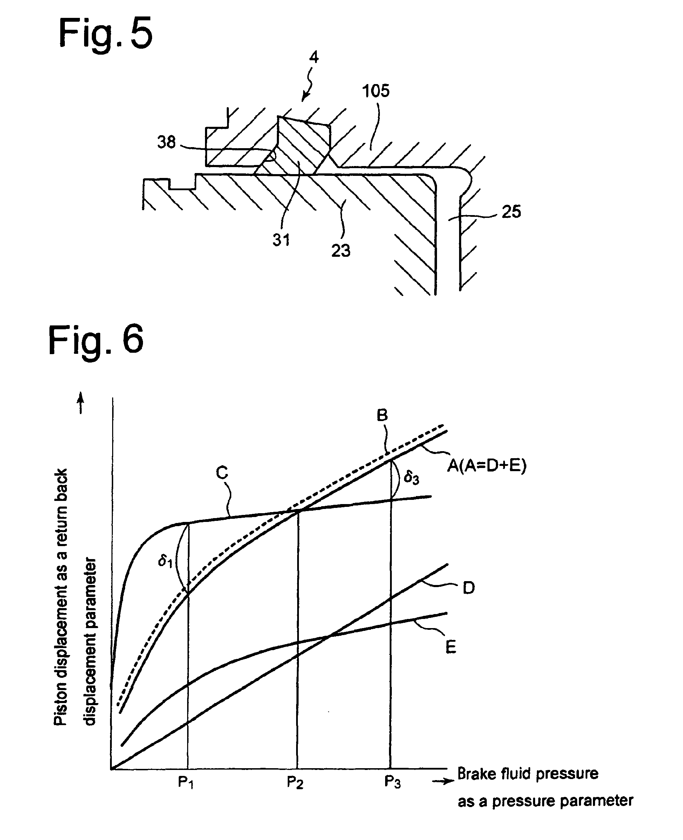

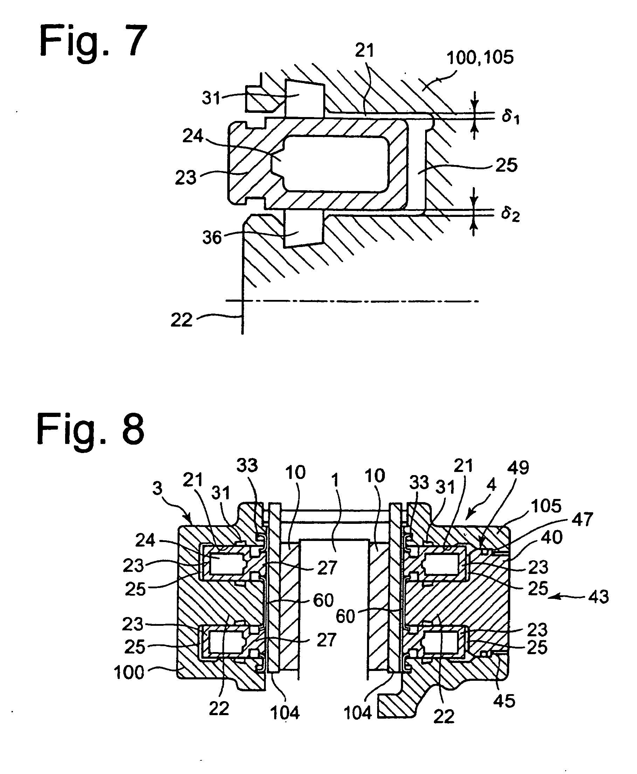

As shown in Fig. 3, the piston 23 comes in contact with the square seal 31 on the outer periphery wall of the piston 23, as well as with the square seal 36 on the inner periphery wall of the piston 23. Fig. 4 illustratively shows how the square seal 31 is keeping in contact with the outer periphery wall of the piston 23 when the brake is not being activated during an incipient stage. When the brake pedal (not shown) is stepped on, the pressure in a brake fluid circuit (not shown) is increased, then the increased pressure in the hydraulic chamber 25 acts on the piston 23; as a result, the piston 23 moves left in Fig. 4, and the square seal 31 elastically deforms as shown in Fig. 5; thereby, the elastic deformation depends on the size of a chamfer 38, the material of the square seal, and so on. This action-mode as to the square seal 31 also applies to the action-mode as to the square seal 36 (as shown in Fig. 7) that slides on and comes in contact with the inner periphery wall of the piston 23.

Fig. 6 shows characteristic curves as to the relations between piston displacements (or return-back displacements) and hydraulic pressures (brake fluid pressures), while the hydraulic pressures are being relieved; thereby, the horizontal axis denotes the brake fluid pressure as a pressure parameter, while the vertical axis denotes the piston displacement as a return back displacement parameter.
In Fig. 6, the curve A shows the relationship between the necessary minimum piston return-back displacement and the brake fluid pressure; the curve B shows the relationship between the ideal piston return-back displacement and the brake fluid pressure; the curve C shows the relationship between the piston return-back displacement and the brake fluid pressure, in the case when a conventionally designed square seal is used for this embodiment; the curve D shows the relationship between the brake caliper deflection and the brake fluid pressure; the curve E shows the relationship between the brake pad compression deformation amount and the brake fluid pressure. Hereby, it is noted that the curve A is obtained by superposing the curve D and the curve E.

As shown in Fig. 6, in a region where the brake fluid pressure is close to the pressure P₂, the piston return-back displacement according to the curve C is approximately equal to that according the curve B; however, if the square seal characteristics of the curve C are applied, then the necessary minimum piston return-back displacement of the curve A falls short of the actual piston return-back displacement of the curve C, by a displacement difference δ₁, in a region where the brake fluid pressure P₁ is lower than the pressure P₂; thus, after the brake fluid pressure is released, the piston returns back with an excess displacement of the difference δ₁, so as to pass the original position before the brake pedal is stepped on. Therefore, when the bake pedal is next pressed, a driver feels as if the free play of the brake pedal were increased in relation to the difference δ₁.

On the other hand, in a region where the brake fluid pressure P₃ is higher than the pressure P₂, the actual piston return-back displacement of the curve C falls short of the necessary minimum piston return-back displacement of the curve A, by a displacement difference δ₃; thus, after the brake fluid pressure is released, the piston returns back with a displacement shortage by the difference δ₃, so as to stop a part of the way back. Therefore, even with the release of the brake pedal (brake pressure), the brake pad remains under a condition such that the brake pad is pressed against the brake disk; accordingly, what is known as a dragging phenomenon occurs, causing an early stage excessive wear of the brake pad and increased fuel consumption due to the increased running resistance.

According to this embodiment, since the square seals 31 and 36 of different properties are provided on the outer periphery wall of the piston 23 and the inner periphery wall for the piston 23 respectively, the ideal piston return-back displacement characteristic of the curve B in Fig. 6 can be substantially obtained by superposing the characteristics of the square seals 31 and 36 of the different properties; in this way, this embodiment can prevent a driver from feeling a sense of anomaly as to the brake pedal manipulation, and as well, it can realize a brake caliper that is free from the dragging phenomenon.

Since the square seal 31 that slides on and comes in contact with the outer periphery wall of the piston 23 has a larger size because of the outer diameter of the piston, the elastic stiffness of the square seal 31 can be sufficient; further, by means of selecting a material of higher hardness for the seal 31, and/or by means of adopting a larger size of the chamfer for the seal groove, a characteristic such that is approximately equivalent to the curve D in Fig. 6 can be rather easily obtained, in conjunction with the relationship between the brake caliper deflection and the brake fluid pressure. On the other hand, since the square seal 36 that slides on and comes in contact with the inner periphery wall of the piston 23 has a smaller size because of the inner diameter of the piston, the elastic stiffness of the square seal 31 can be restrained; thus, by means of selecting a material of lower hardness for the seal 36, and/or by means of adopting a smaller size of the chamfer for the seal groove, a characteristic that is approximately equivalent to the curve E in Fig. 6 can be obtained, whereby the curve E is regarded as a characteristic of a quick response case.
In this way, it is preferable that a combination of a shape and material as to the seals 31 and 36 is designed so that the shear stiffness of the outer square seal 31 is higher than that of the inner square seal 36; thus, by means of installing square seals of different properties in the brake caliper, a seal characteristic substantially equivalent to the characteristic of the curve B that is a to-be-targeted curve as shown in Fig. 6 can be obtained.

### (A third embodiment)

Hereby, a third embodiment according to the present invention is explained based upon Fig. 7. This embodiment relates to a determination or a designing of the clearance between the piston 23 and the hole 21 for housing the piston 23.

Fig. 7 depicts the arrangement of the piston 23 and the hole 21 in detail; the piston 23 is placed in the hole 21 with a clearance δ₁ between the piston 23 and the caliper body 100 or 105 and a clearance δ₂ between the piston 23 and the center protrusion 22; in this embodiment, it is basically assumed that the clearance δ₁ is not equal to the clearance δ₂. In other words, different clearances are applied to the outer side clearance and the inner side clearance as to the annular shaped piston 23 so as to design the brake caliper 2.

As shown in Fig.7, the piston 23 strongly presses the disk rotor 1 via the brake pad 10, when a brake fluid pressure is applied in the hydraulic chamber 25 of the caliper body 100 or 105.
On the other hand, since the disk rotor moves in a direction vertical to the paper surface of Fig. 7, the brake pad and in turn the backing plate and the piston 23 are forced to move slightly in the same direction; then, the clearance δ₁ around the outer periphery of the piston gets closer to zero in the described direction. There are two clearance-designing methods (concepts) in determining the clearances δ₁ and δ₂; the methods are explained as follows.

In the mentioned first method, it is basically assumed that the clearance δ₁ on the outer periphery of the piston 23 greater than the clearance δ₂ on the inner periphery of the piston 23. Thus, even if the clearance δ₁ becomes zero, namely, even if the piston 23 gets in contact with the caliper body 100 or 105, the clearance δ₂ is still greater than zero; accordingly, the (positive) clearance between the piston 23 and the center protrusion 22 can be secured (in other words, the center protrusion 22 can not get in contact with the piston 23). Thus, the center protrusion 22 can be free from being bent by the force that the piston 23 receives in the direction vertical to the paper surface of Fig. 7; this gives the brake caliper a structural advantage in regard to strength.

On the other hand, in the above-mentioned second method, it can be assumed that the clearance δ₁ on the outer periphery of the piston 23 is smaller than the clearance δ₂. In the case of this context, even if the clearance δ₂ becomes zero, namely, even if the piston 23 gets in contact with the center protrusion 22, the clearance δ₁ is still greater than zero, and; accordingly, the (positive) clearance between the piston 23 and the caliper body 100 or 105 can be secured. In other words, the piston 23 can not get in contact with the caliper body 100 or 105. Thus, when the brake fluid pressure is released, the piston can return back to an original position where the piston is placed before the brake fluid pressure was applied, by means of the deformation restoring force of the square seals 31 and 36. Accordingly, a clearance between the disk rotor 1 and the brake pad 10 can be secured; this prevents the disk rotor 1 in Fig. 1 from dragging the brake pad 10 in Fig. 1 even under a normal running condition of the vehicle.

Hereby and hereafter, the fourth to seventh embodiments according to the present invention are explained. In the embodiments, the center protrusion 22 is configured not as a part of caliper body 100 or 105, but as a member separated from the caliper body.

### (A fourth embodiment)

First, the fourth embodiment is explained with reference to Fig. 8.
The brake caliper is not divided into two members; namely, the caliper is not formed with an outer piece 3 and an inner piece 4, but with a single piece into which an outer piece 3 and an inner piece 4 are combined. Needless to say, it is no longer necessary to have a bolt fastening the pieces 3 and 4.
According to this embodiment, in an inner caliper body 105, for the purpose of achieving simplified manufacturing, a machined hole 43 for housing an end plug 40 is provided; thereby, the end plug 40 includes a center protrusion 22 (in Fig. 8), not as a part of the inner caliper body, so that the center protrusion 22 can be pulled out from the inner caliper body. The configuration of this embodiment is the same as the configuration of the brake caliper 2 in the second embodiment explained with Fig. 3, except that the machined hole 43 for housing the end plug 40 is provided.

Also in the brake caliper of this embodiment, as is in the brake caliper according to the above-described first or second embodiment, a center protrusion is formed, at a place in accordance with the place of the protrusion in the first or second embodiment, in an outer caliper body 100 of an outer piece 3, as well as, in an inner caliper body 105 of an inner piece 4.
However, the center protrusion 22 of the inner caliper body 105 is formed as a part of the end plug 40 that is screwed into the inner caliper body 105, with a fastening screw mechanism 45 in the case of Fig. 8. Needless to say, a fastening mechanism other than the screw mechanism can be applied to this embodiment.

As shown in Fig. 8, the fastening mechanism 45 is furnished on the outer periphery side of the end plug, as well as, on an (outer) end-face side of the end plug; a step 47 is provided on the outer periphery of the end plug, between an end of the fastening screw and the brake pad 10; a fitting surface 49 of the end plug 40 that faces the inner caliper body is formed with an outer periphery of a larger diameter part as to the step 47; a vertical step-surface that is vertical to the center axis of the end plug and parallel to the end face of the end plug is used as a seating surface so that the end plug can be positioned in the inner caliper body, and the end plug does not come out of the inner caliper body.

According to the fourth embodiment as detailed above, it is not necessary that the center protrusion 22 be manufactured as a part of the inner caliper; this lowers the manufacturing cost of a brake caliper in view of machining and assembling.
Further, the brake caliper is not formed with an outer piece 3 and an inner piece 4, but with a single piece into which an outer piece 3 and an inner piece 4 are combined; therefore, the reliability of the brake caliper can be enhanced. In addition, since the brake caliper 2 can have enhanced rigidity, the disk rotor can be more strongly pressed, and a braking force of enhanced stability can be achieved.

Still further, as shown in Fig. 8, since a machining jig for machining the hole 21 for housing the piston can be inserted through the machining hole 43 prior to installing the end plug 40, the machining of the hole 21 for housing the piston in the outer piece 3 side can be simplified; therefore, the machining of the hole 21 can be easily performed even in the case where an outer piece 3 and an inner piece 4 are combined into a single piece body.

### (A fifth embodiment)

Hereby, a fifth embodiment according to the present invention is explained based upon Figs. 9 and 10.
In this fifth embodiment, a guide member 50 is provided so that the guide member forms a tip (top) part of the center protrusion 22 that is placed in the middle part of the hole 21 for housing each piston 23; namely, the guide member 50 forms a tip part of the center protrusion 22, the tip (top) part being manufactured as a different part from the center protrusion as well as being attached to the center protrusion.
Incidentally, regarding the elements already described in the first to third embodiments, the same numeral symbols are used as in these embodiments; and, repeated explanations of the elements are hereby omitted.

As shown in Fig. 9, a center protrusion 22 that is formed in the middle part of the inner caliper body 105 is configured with the guide member 50 and a base protrusion part 52; and, the member 50 and the part 52 are fastened together through a screw mechanism 54. In addition, as shown in Fig. 10, a fastening mechanism other than the screw mechanism 54, for instance, a friction welding fastening can be applied to this embodiment. Needless to say, alternative friction mechanisms such as diffusion bonding, welding, or an adhesive bonding can be used.
On a head part of the guide member 50, a recess 56 is depressed so that a fastening jig for fastening the member 50 and the part 52 through a screw fastening or a pressure welding can be set. Further, on the outer periphery of the guide member 50, an inner seal groove 58 for housing the square seal 36 is provided so that the square seal 36 is fitted into the inner seal groove.

The guide member 50 provided with the square seal 36 that slides on and comes in contact with the inner periphery wall for the piston 23 is combined with the base protrusion part 52; thus, from the inner caliper body 105 in connection with the machining of the hole 21 for housing the piston 23, a machining of the part corresponding to the outer periphery of the guide member 50 can be eliminated; accordingly, not only the machining can be simplified but also a risk as to a possible collision of a machining jig with the center protrusion 22 can be eliminated; as a result, enhanced machining accuracy can be achieved, together with enhanced rigidity of the jig, and enhanced productivity can be achieved as well.
In addition, only by means of installing the guide member 50 that is machined separately from the other parts, with a high degree of accuracy, both outer diameters and inner diameters as to the part housing the piston 23 are realized also with a high degree of accuracy; thus, enhanced accuracy can be achieved, with no decrease in productivity.

In relation to the clearances between the outer periphery wall of the piston 23 and the inner diameter periphery wall of the piston-housing hole 21 in the inner caliper body 105, as well as, between the inner periphery wall of the piston 23 and the outer periphery of the guide member 50, the variations (deviations) as to the clearances have to be confined within an absolute minimum so as to provide maximum performance as designed in relation to the square seals 31 and 36.
In order to confine the variations (deviations), a quality control technique is adopted; whereby, machined pistons 23 within tolerance are classified, for example, into three layers according to the finished outer diameter measurements of the piston; in response to a result as to the inner periphery wall diameter measurement of a piston-housing hole 21 in an inner caliper body 105, it is determined which layer of pistons is assigned to the piston-housing hole 21. Hereafter, this technique is called a fit-selection control.

Since the piston 23 is configured so as to form an annular tubular shape, the piston itself has a hollow space around the center axis in the running direction; thus, the piston has two engaging running surfaces: the outer periphery wall surface and the inner periphery wall surface. As a result, it is required to perform the above-mentioned fit selection control as to the outer periphery side and also the inner periphery side; however, this dual-sided fit-selection control can be simplified according to this fifth embodiment as is described in a later paragraph.
If the guide member 50 and the inner caliper body are made as one piece from the beginning, namely, if the center protrusion 22 is made as a part of the inner caliper body, then the above-mentioned fit selection control, for example, of the three-layer clearance-classification is required so that clearance measurements have to be performed on both the clearances as to the inner periphery wall surface side of the piston-housing hole 21 and the outer diameter periphery wall surface side of the protrusion 22; thus, 9 (3x3) layers have to be prepared in advance. In fact, such a control with many layers is not realistic.

According to this fifth embodiment, the guide member 50 is separated from the center protrusion 22 that faces the inner periphery wall surface side of the piston 23, so that the guide member 50 and the base protrusion part 52 configure the center protrusion 22;
First, an inner periphery wall diameter of a piston-housing hole 21 in an inner caliper body 105 is measured; in response to the measurement result, a piston 23 is selected from one of the three layers in which machined pistons 23 have been classified in accordance with piston outer diameter measurements in advance, so as to make a pair of a piston 23 and an inner caliper body 105. Thus far, the manner is the same as a manner in the conventional fit-selection control; yet, in this embodiment, the inner periphery wall diameter of the selected piston 23 is measured; further, in response to the measurement result, a guide member 50 is selected from one of the three layers in which machined guide members 50 have been classified in accordance with guide member outer diameter measurements in advance; and, the selected guide member 50 is fastened to the base protrusion part 52 of the center protrusion 22, by means of a screw mechanism or through friction welding; the piston 23 that can provide allowable outer and inner clearances is selected so as to be assembled.
In this way, the 9 (3x3) layer fit-selection control such as is complicated as mentioned can be avoided; thus, desired performance as to the square seals 31 and 36 can be obtained without a decrease in productivity.

### (A sixth embodiment)

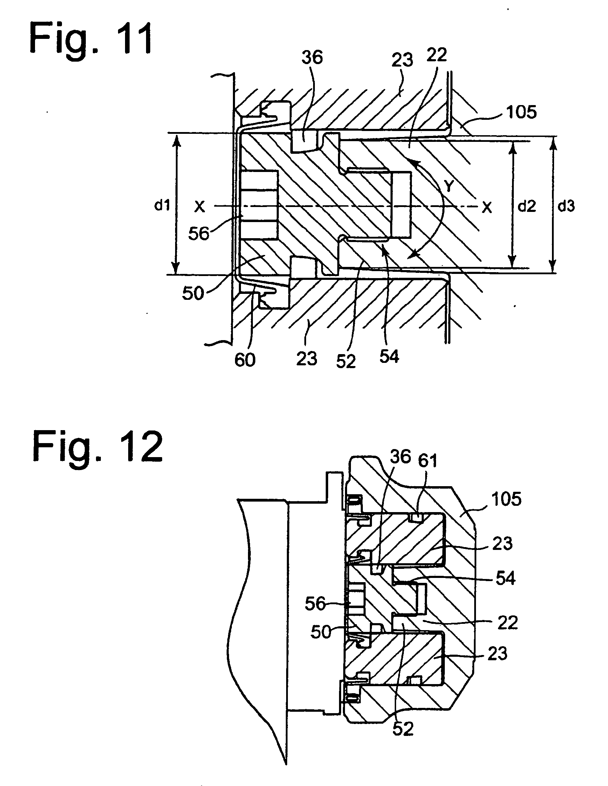

Hereby, a sixth embodiment according to the present invention is explained based upon Fig. 11.
In this sixth embodiment, as shown in Fig. 11, an outer diameter d₁ of the guide member 50 is set-up so as to be larger than an outer diameter d₂ as to the base protrusion part 52 of the center protrusion 22; this point distinguishes the sixth embodiment from the fifth embodiment.
Incidentally, regarding the elements already described in the fifth embodiments, the same numeral symbols are used as are in the embodiments; and, repeated explanations of the elements are hereby omitted.
As shown in Fig. 11, the outer periphery of the base protrusion part 52 of the center protrusion 22 is conical in shape, namely the generating line is tapered along the center axis thereof toward the guide member 50; the diameter of a base root as to the base part 52 is d₃, while that of a head part as to the base part 52 is d₂. Further, the outer diameters of the base protrusion part 52 including d₂ and d₃ are smaller than the outer diameter d₁ as to a head part of the guide member 50. In addition, for preventing outside foreign matter such as dust or mud from entering inside, a dust boot 60 is fitted on the top side of the guide member 50.

According to this sixth embodiment, the outer diameter d₂ as to the base protrusion part 52 of the center protrusion 22 is smaller than the outer diameter d₁ of the guide member 50; thus, owing to the widened clearance around base protrusion part 52, the possible collision contact between the piston 23 and the base part 52 can be less likely to happen, even in a case of piston-slap; it is noted that the piston-slap is defined as a relative movement between the piston 23 and the piston-housing hole 21 whereby the piston is shaken in the piston-housing hole as if the piston is rotated around an axis vertical to the piston center axis (X-X in Fig.11). In other words, it is meant that the center protrusion 22 or the base protrusion part 52 swings along the Y-direction as shown in Fig. 11, rotating around an axis vertical to the drawing paper surface, in the hollow space of the piston center middle part.
Therefore, the base protrusion part 52 of the center protrusion 22 can be free from a force (a collision-contact force) such as causes a bending moment to the base protrusion part 52; incidentally, it is noted that there is no structure or strength problem, even though the outer periphery wall of the base protrusion part 52 is slightly removed because of the taper machining. Further, the outer diameter as to the base protrusion part 52 of the center protrusion 22 is smaller than the outer diameter of the guide member 50; it becomes unnecessary to finish the outer periphery surface of the base protrusion part 52. Thus, the outer surface of the base protrusion part 52 can remain the surface of raw materials such as diecast material. As a result, the production cost can be reduced.

Moreover, the guide member 50 incorporating the square seal 36 that slides on and comes in contact with the inner periphery wall of the piston 23 is a member separated from the base protrusion part 52; and, the outer diameter of the guide member 50 is larger than outer periphery diameter of the base protrusion part 52. Thus, the guide member can house the square seal 36 with a sufficient space, and without enhanced machining accuracy in contrast to the machining accuracy around the base protrusion part. In this way, only with moderate machining accuracy, the guide member can be manufactured; only with incorporating this guide member into the brake caliper, the square seal 36 that slides on and comes in contact with the inner periphery wall of the piston 23 can be easily realized.

### (A seventh embodiment)

Hereby, a seventh embodiment according to the present invention is explained based upon Fig. 12.
In this sixth embodiment, the position of the square seal 31 as an outer seal member in the fifth embodiment as shown in Figs. 9 and 10 is shifted from a place in the inner caliper 105, to a place in the piston 23; namely, the location of the seal 31 in the inner caliper body 105 is shifted to the location of the seal 61 in the piston 23 as shown in Fig. 12.
In the case of providing the square seal 61 in the seal groove formed on the outer periphery wall side of the piston 23, the same level of sealing performance as is in the fifth embodiment can be achieved; yet, since machining of the seal groove for the inner diameter periphery wall of the piston-housing hole 21 can be dispensed with, the machining of the inner caliper can be simplified.

### Industrial Applicability

According to the present invention, the pressing part of the piston is of an annular-ring shape while the pressing part of a conventional piston is of a solid cylinder shape; thus, the outer diameter of the piston area, namely, the outer diameter of the piston pressing part in the present invention can be larger than the diameter of the piston pressing part in the conventional piston, even though the respective piston areas are the same; thus, the brake caliper in the present invention can be of a compact structure, and has the same level of performance as in a conventional brake caliper with at least two pairs of pistons.
As a result, the brake pad can be pressed with an even surface pressure distribution pattern over the whole brake pad; the clearance gap between the brake pad and the disk rotor can be reduced; as a result, an excellent braking force can be achieved, and the problem of brake squealing can be eliminated.
Further, since not only the outer seal on the outer periphery of the piston is provided, but also the inner seal on the inner periphery of the piston is provided, the piston can be surely returned back to an original position before a braking action, thanks to the enhanced deformation restoring capability as to each seal, when the brake fluid pressure is released; thus, a dragging phenomenon between the brake disk and the brake pad is significantly less likely to happen.
In conclusion, the present invention is applicable to a brake caliper that is used in a vehicle such as an automobile or a motorcycle.

## Claims

1. A brake caliper for a disk brake, the caliper being provided with at least one pair of brake pistons (23) so that the brake pistons of each pair face each other across a disk rotor (1),
wherein each brake piston has the shape of a thick-walled cylinder and is provided with a pressing part (27) for thrusting a force against the disk rotor via a brake pad backing plate (104) and a brake pad (10);
wherein for each brake piston, an annular ring shaped hole space (21) for housing the piston is incorporated in a caliper body (100, 105), corresponding to the thick-walled cylinder shape of the piston, so that the piston slides in the hole space, along the center axis of the piston, being guided in the hole space; and
wherein for each brake piston, an outer square seal (31) is provided between an outer periphery of the piston and a cylindrical outer periphery wall of the hole space and an inner square seal (36) is provided between an inner periphery of the piston and a cylindrical inner periphery wall of the hole space; and
**characterized in that** for each brake piston
the pressing part (27) has an annular ring shape; and
the inner seal (36) and the outer seal (31) are adapted such that the shear stiffness of the outer seal is higher than the one of the inner seal in order to ensure that, when a hydraulic pressure applied to the brake disc is released, a sufficient restoring force on the thrusting brake piston is achieved.

2. The brake caliper for a disk brake according to claim 1, wherein a center protrusion part (22) is provided so as to form the inner diameter periphery wall of the annular ring shaped hole space (21) for housing the piston (23); and, the center protrusion is formed as a member separated from the caliper body.

3. The brake caliper for a disk brake according to claim 2, wherein the center protrusion part (22) forms a part of the caliper body, and the center protrusion part is separated from the remainder of the caliper body in the direction of the center axis of the piston (23).

4. The brake caliper for a disk brake according to claim 2, thereby a top protrusion part of the center protrusion part (52) is separated from the remainder of the center protrusion part.

5. The brake caliper for a disk brake according to claim 3 or 4, wherein the center protrusion part (22) that is separated from the remainder of the caliper body or a top protrusion part of the center protrusion part that is separated from the rest of the center protrusion part is fastened to the caliper body, by means of a screw mechanism, a friction welding method, a diffusion bonding method, a welding method or an adhesive bonding method, as a fastening method.

6. The brake caliper for a disk brake according to claim 3 or 4, wherein an inner seal groove (58) for housing the inner seal (36) that slides on and comes in contact with the inner periphery wall for the piston (23) is provided on the side of the outer diameter periphery wall of the center protrusion part (22) or on the side of the outer diameter periphery wall of the top protrusion part of the center protrusion part.

7. The brake caliper for a disk brake according to claim 4, thereby the outer diameter of the top protrusion part is larger than the outer diameter of the rest part of the center protrusion part (22).

8. The brake caliper for a disk brake according to claim 1, wherein an outer clearance is provided between the outer periphery wall of the piston and the outer diameter periphery wall of the piston housing hole, as well as, an inner clearance is provided between the inner periphery wall of the piston (23) and the inner diameter periphery wall of the piston housing hole; whereby a difference in amount between both clearances is made.

9. The brake caliper for a disk brake according to claim 1, thereby the piston (23) of the annular ring type that is a thick-walled cylinder shape type is provided with a hollow space inside of the ring itself.

## Patentansprüche

1. Bremssattel für eine Scheibenbremse, wobei der Sattel mit mindestens einem Paar von Bremskolben (23) versehen ist, so dass die Bremskolben jedes Paars einander über einen Scheibenrotor (1) gegenüberliegen,
wobei jeder Bremskolben die Form eines dickwändigen Zylinders aufweist und mit einem Druckteil (27) zum Aufbringen einer Kraft gegen den Scheibenrotor über eine Bremsklotz-Stützplatte (104) und einen Bremsklotz (10) versehen ist,
wobei für jeden Bremskolben ein ringförmiger Hohlraum (21) zum Aufnehmen des Kolbens in einem Sattelkörper (100, 105) enthalten ist, der der dickwändigen Zylinderform des Kolbens entspricht, so dass der Kolben in dem Hohlraum entlang der Mittelachse des Kolbens gleitet, wobei er im Hohlraum geführt wird; und
wobei für jeden Bremskolben eine äußere rechteckige Abdichtung (31) zwischen einem Außenrand des Kolbens und einer zylindrischen Außenrandwand des Hohlraums vorgesehen ist und eine innere rechteckige Abdichtung (36) zwischen einem Innenrand des Kolbens und einer zylindrischen Innenrandwand des Hohlraums vorgesehen ist; und
**gekennzeichnet dadurch, dass** für jeden Bremskolben das Druckteil (27) eine Ringform aufweist; und
die innere Abdichtung (36) und die äußere Abdichtung (31) so ausgelegt sind, dass die Schubsteifigkeit der äußeren Abdichtung höher als die der inneren Abdichtung ist, um sicherzustellen, dass eine ausreichende Wiederherstellungskraft auf den drückenden Bremskolben erreicht wird, wenn ein auf die Bremsscheibe angewendeter hydraulischer Druck weggenommen wird.

2. Bremssattel für eine Scheibenbremse nach Anspruch 1, wobei ein mittleres Vorstehteil (22) so angeordnet ist, dass es die Innendurchmesser-Randwand des ringförmigen Hohlraums (21) zum Aufnehmen des Kolbens (23) bildet, und wobei das mittlere Vorstehteil als ein vom Sattelkörper getrenntes Element gebildet ist.

3. Bremssattel für eine Scheibenbremse nach Anspruch 2, wobei das mittlere Vorstehteil (22) einen Teil des Sattelkörpers bildet und vom Rest des Sattelkörpers in der Richtung der Mittelachse des Kolbens (23) getrennt ist.

4. Bremssattel für eine Scheibenbremse nach Anspruch 2, wobei ein oberes Vorstehteil des mittleren Vorstehteils (52) vom Rest des mittleren Vorstehteils getrennt ist.

5. Bremssattel für eine Scheibenbremse nach Anspruch 3 oder 4, wobei das mittlere Vorstehteil (22), das vom Rest des Sattelkörpers getrennt ist, oder ein oberes Vorstehteil des mittleren Vorstehteils, das vom Rest des mittleren Vorstehteils getrennt ist, am Sattelkörper mittels eines Schraubenmechanismus, eines Reibschweißverfahrens, eines Diffusionsverbindungsverfahrens, eines Schweißverfahrens oder eines Klebverbindungsverfahrens als Befestigungsverfahren befestigt ist.

6. Bremssattel für eine Scheibenbremse nach Anspruch 3 oder 4, wobei eine innere Abdichtungsnut (58) zum Aufnehmen der inneren Abdichtung (36), die auf der inneren Randwand für den Kolben (23) gleitet und mit dieser in Berührung steht, auf der Seite der Außendurchmesser-Randwand des mittleren Vorstehteils (22) oder auf der Seite der Außendurchmesser-Randwand des oberen Vorstehteils des mittleren Vorstehteils angeordnet ist.

7. Bremssattel für eine Scheibenbremse nach Anspruch 4, wobei der Außendurchmesser des oberen Vorstehteils größer als der Außendurchmesser des restlichen Teils des mittleren Vorstehteils (22) ist.

8. Bremssattel für eine Scheibenbremse nach Anspruch 1, wobei ein äußerer Abstand zwischen der äußeren Randwand des Kolbens und der Außendurchmesser-Randwand des Kolbenaufnahmelochs ebenso wie ein innerer Abstand zwischen der inneren Randwand des Kolbens (23) und der Innendurchmesser-Randwand des Kolbenaufnahmelochs vorgesehen sind, wodurch eine Größendifferenz zwischen beiden Abständen hergestellt ist.

9. Bremssattel für eine Scheibenbremse nach Anspruch 1, wobei der Kolben (23) vom Ringtyp, der ein Typ mit dickwändiger Zylinderform ist, mit einem Hohlraum innerhalb des Rings selbst versehen ist.

## Revendications

1. Etrier de frein pour un frein à disque, l'étrier étant prévu avec au moins une paire de pistons de frein (23) de sorte que les pistons de frein de chaque paire se font face de part et d'autre d'un rotor de disque (1),
dans lequel chaque piston de frein a la forme d'un cylindre à paroi épaisse et est prévu avec une partie de pression (27) pour pousser une force contre le rotor de disque, via une plaque de support de plaquette de frein (104) et une plaquette de frein (10) ;
dans lequel pour chaque piston de frein, un espace formant trou en forme de bague annulaire (21) pour loger le piston est incorporé dans un corps d'étrier (100, 105), correspondant à la forme de cylindre à paroi épaisse du piston, de sorte que le piston coulisse dans l'espace formant trou, le long de l'axe central du piston, en étant guidé dans l'espace formant trou ; et
dans lequel pour chaque piston de frein, un joint d'étanchéité carré externe (31) est prévu entre une périphérie externe du piston et une paroi périphérique externe cylindrique de l'espace formant trou et un joint d'étanchéité carré interne (36) est prévu entre une périphérie interne du piston et une paroi périphérique interne cylindrique de l'espace formant trou ; et
**caractérisé en ce que** pour chaque piston de frein :
la partie de pression (27) a une forme de bague annulaire ; et
le joint d'étanchéité interne (36) et le joint d'étanchéité externe (31) sont adaptés de sorte que la rigidité de cisaillement du joint d'étanchéité externe est supérieure à celle du joint d'étanchéité interne afin de garantir que, lorsqu'une pression hydraulique appliquée sur le disque de frein est relâchée, on obtient une force de rappel suffisante sur le piston de frein de poussée.

2. Etrier de frein pour un frein à disque selon la revendication 1, dans lequel une partie de saillie centrale (22) est prévue afin de former la paroi périphérique de diamètre interne de l'espace formant trou en forme de bague annulaire (21) pour loger le piston (23) ; et, la saillie centrale est formée comme un élément séparé du corps d'étrier.

3. Etrier de frein pour un frein à disque selon la revendication 2, dans lequel la partie de saillie centrale (22) forme une partie du corps d'étrier, et la partie de saillie centrale est séparée du reste du corps d'étrier dans la direction de l'axe central du piston (23).

4. Etrier de frein pour un frein à disque selon la revendication 2, ainsi une partie de saillie supérieure de la partie de saillie centrale (52) est séparée du reste de la partie de saillie centrale.

5. Etrier de frein pour un frein à disque selon la revendication 3 ou 4, dans lequel la partie de saillie centrale (22) est séparée du reste du corps d'étrier ou une partie de saillie supérieure de la partie de saillie centrale qui est séparée du reste de la partie de saillie centrale est fixée sur le corps d'étrier, au moyen d'un mécanisme à vis, un procédé de soudage par friction, un procédé de soudage par diffusion, un procédé de soudage ou un procédé d'assemblage par collage, en tant que procédé de fixation.

6. Etrier de frein pour un frein à disque selon la revendication 3 ou 4, dans lequel une rainure de joint d'étanchéité interne (58) pour loger le joint d'étanchéité interne (36) qui coulisse sur et vient en contact avec la paroi périphérique interne pour le piston (23) est prévue sur le côté de la paroi périphérique de diamètre externe de la partie de saillie centrale (22) ou sur le côté de la paroi périphérique de diamètre externe de la partie de saillie supérieure de la partie de saillie centrale.

7. Etrier de frein pour un frein à disque selon la revendication 4, moyennant quoi le diamètre externe de la partie de saillie supérieure est plus grand que le diamètre externe de la partie résiduelle de la partie de saillie centrale (22).

8. Etrier de frein pour un frein à disque selon la revendication 1, dans lequel un jeu externe est prévu entre la paroi périphérique externe du piston et la paroi périphérique de diamètre externe du trou de logement de piston, ainsi qu'un jeu interne est prévu entre la paroi périphérique interne du piston (23) et la paroi périphérique de diamètre interne du trou de logement de piston ; moyennant quoi il existe une différence du point de vue de la quantité entre les deux jeux.

9. Etrier de frein pour un frein à disque selon la revendication 1, moyennant quoi le piston (23) du type à bague annulaire qui est un type de forme de cylindre à paroi épaisse est prévu avec un espace creux à l'intérieur de la bague elle-même.
